# EUROPÄISCHE PATENTSCHRIFT

(11) **EP 4 012 528 B1**
(45) Veröffentlichungstag und Bekanntmachung des Hinweises auf die Patenterteilung: **22.01.2025**
(21) Anmeldenummer: 21211276.7
(22) Anmeldetag: 30.11.2021
(51) Int. Cl.: G05D 1/00

(54) **STEUERUNG EINER BODENBEARBEITUNGSMASCHINE**
CONTROL OF A SOIL WORKING MACHINE
COMMANDE D'UNE MACHINE DE TRAITEMENT DU SOL

(30) Priorität: 14.12.2020 DE 102020215846
(43) Veröffentlichungstag der Anmeldung: 15.06.2022
(73) Patentinhaber: BSH Hausgeräte GmbH, 81739 München (DE)
(72) Erfinder: Schreiner, Dominik, 36043 Fulda (DE); Wald, Andreas, 36160 Dipperz (DE); Lange, Matthias, 98693 Ilmenau (DE)

(56) Entgegenhaltungen:
- WO-A2-2018/158248

## Beschreibung

Die vorliegende Erfindung betrifft die Steuerung einer Bodenbearbeitungsmaschine. Insbesondere betrifft die Erfindung die Steuerung der Maschine zur Bearbeitung eines vorbestimmten Bereichs einer Bodenfläche.

Eine Bodenbearbeitungsmaschine ist dazu eingerichtet, eine Bodenfläche autonom abzufahren und dabei zu bearbeiten. Beispielsweise kann die Maschine einen autonomen Staubsauger umfassen. In unterschiedlichen Modi kann die Maschine beispielsweise eine Komplettreinigung einer vorbestimmten Bodenfläche durchführen, eine besonders strapazierte Laufstraße reinigen oder eine bedarfsgesteuerte Reinigung eines vorbestimmten Bereichs der Bodenfläche durchführen. Die Reinigung des Bereichs kann beispielsweise erforderlich sein, nachdem Zucker, Haferflocken oder Brötchenkrümel verschüttet wurden. Diese Art der Reinigung ist auch als Spot-Reinigung bekannt.

Ein bekannter autonomer Staubsauger kann zur Spot-Reinigung nahe an einen verschmutzten Bereich gebracht werden, wo er die Lokalreinigung durchführt. Einem Benutzer kann nicht unmittelbar klar sein, welcher Bereich dabei tatsächlich bearbeitet wird. Beispielsweise kann der Benutzer fälschlich annehmen, dass der Bereich vor dem Gerät beginnt, wenn er tatsächlich an der Position des Geräts beginnt, oder umgekehrt. Auch die Größe des Bereichs, der gereinigt wird, kann vom Benutzer schlecht eingeschätzt werden. Aus DE 10 2017 104 428 A1 ist ein Roboter bekannt, der basierend auf einem eingegebenen Sperrbereich operiert. DE 10 2010 015 923 A1 und DE 10 2009 059 215 A1 beschreiben Ansätze zur Zielführung eines Reinigungsroboters.

Die Druckschrift WO 2018/158248 A2 beschreibt ein Bodenreinigungsverfahren, bei dem dem Nutzer eine virtuelle Begrenzung durch direkte Projektion auf den Boden sichtbar gemacht wird.

Eine der vorliegenden Erfindung zu Grunde liegende Aufgabe besteht in der Angabe einer verbesserten Technik, die eine präzise Einschätzung bzw. Steuerung eines zu bearbeitenden Bodenbereichs durch einen Benutzer erlaubt. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Steuern einer Maschine zur Bearbeitung einer Bodenfläche mittels einer Steuervorrichtung Schritte des Erfassens einer Anforderung zur Lokalreinigung auf einem Bereich der Bodenfläche ; des Projizierens eines Hinweises auf Grenzen eines geplanten Bereichs auf die Bodenfläche mittels eines Projektors der Steuervorrichtung; des Erfassens einer Bestätigung des Bereichs, wobei die Bestätigung bestimmt wird, falls über eine vorbestimmte Zeit keine vorbestimmte Bedieneingabe erfasst wurde; und des Startens der Bearbeitung des Bereichs innerhalb der Grenzen mittels der Maschine, wobei der Bereich bezüglich der Maschine bestimmt ist und die vorbestimmte Bedieneingabe eine Änderung der Position der Maschine umfasst.

Mittels des Verfahrens kann einem Benutzer unmittelbar angezeigt werden, wo Grenzen eines Bereichs verlaufen, der im Rahmen einer Spot-Reinigung bearbeitet wird. Dadurch kann vermieden werden, dass die Maschine eine zu bearbeitende Stelle nicht bearbeitet, oder dass der zu bearbeitende Bereich zu klein oder zu groß ist. Eine Universal-Anzeige oder ein konventionelles Bedienelement an der Maschine können eingespart werden.

In einer Ausführungsform können unterschiedliche Bereiche voreingestellt sein, sodass der Benutzer beispielsweise unterschiedlich große Bereiche bezüglich der Maschine abrufen kann.

Die Bestätigung kann bestimmt werden, falls der Benutzer eine vorbestimmte Bedieneingabe vornimmt. Eine andere vorbestimmte Bedieneingabe kann hingegen ignoriert werden.

Die Bestätigung wird bestimmt, falls über eine vorbestimmte Zeit keine vorbestimmte Bedieneingabe erfasst wurde. Die vorbestimmte Zeit kann beispielsweise ca. 5 Sekunden betragen. In einer Ausführungsform wird ein Hinweis auf eine verbleibende Zeit bis zur Bestimmung der Bestätigung in Form eines Countdown bereitgestellt. Der Countdown kann beispielsweise als optisches oder akustisches Signal ausgegeben werden. Dabei kann das Verstreichen der Zeit signalisiert werden, und/oder es kann ein Hinweis darauf gegeben werden, dass die Zeit abgelaufen ist.

Ein optisches Signal kann unmittelbar an der Maschine ausgegeben oder auf die Bodenfläche projiziert werden. Beispielsweise kann eine Anzahl verbleibender Sekunden bis zur Übernahme des Bereichs numerisch angezeigt werden. Das optische Signal kann auch symbolisch gegeben werden, etwa in Form eines zu- oder abnehmenden Balkens oder eines zu- oder abnehmenden Kreissegments. Eine aus dem Bereich der Computertechnik bekannte Metapher kann hier vorteilhaft verwendet werden. Ein akustisches Signal kann als Ton oder Tonfolge, oder auch als gesprochene Information ausgegeben werden.

Erfindungsgemäß ist der Bereich bezüglich der Maschine bestimmt, wobei die vorbestimmte Bedieneingabe eine Änderung der Position der Maschine umfasst. Dabei kann der Hinweis auf die Grenzen des Bereichs kontinuierlich ausgegeben werden, sodass der Benutzer den Bereich interaktiv einstellen kann, indem er die Position bzw. die Pose der Maschine passend einstellt.

Der Bereich kann eine aktuelle Position der Maschine auf der Bodenfläche umfassen. Die Maschine kann beispielsweise auf das Zentrum einer Verschmutzung gebracht werden und der Bereich kann relativ zu dieser Position bestimmt werden. Der Bereich kann dann noch bezüglich seiner Form oder Größe angepasst werden.

In einer Ausführungsform weist der Bereich eine vorbestimmte Form auf, wobei die Bedieneingabe eine Änderung der Größe der Form umfasst. Dabei kann die Form symmetrisch zu einem vorbestimmten Fixpunkt skaliert werden. Der Fixpunkt kann insbesondere eine Position der Maschine betreffen. In einer weiteren Ausführungsform kann auch ein Seitenverhältnis oder eine ähnliche Proportion der Form beeinflusst werden. Ein Benutzer kann entsprechende Eingaben beispielsweise über ein dediziertes Bedienelement an der Maschine oder eine separate Bedieneinrichtung eingeben, die bevorzugt drahtlos mit der Maschine gekoppelt ist. Eine solche Einrichtung kann insbesondere ein mobiles Gerät wie ein Smartphone umfassen.

Der Bereich kann viereckig sein, wobei die Grenzen jeweils im Bereich zweier einander diagonal gegenüberliegender Ecken auf die Bodenfläche projiziert werden. So kann ein eindeutiger Hinweis auf den Bereich ausgegeben werden, ohne den Bereich vollständig darzustellen. In Abhängigkeit einer Projektionseinrichtung kann dadurch ein helleres oder schneller zu änderndes Bild auf die Bodenfläche geworfen werden.

Der Bereich kann bezüglich der Bodenfläche bestimmt sein, wobei eine Veränderung einer Pose der Maschine zwischen dem Erfassen der Bestätigung und dem Starten der Bearbeitung bestimmt wird.

Beispielsweise kann ein Benutzer das Gerät in der Hand halten, während er eine Lokalreinigung anfordert. Die Maschine kann eine Projektion auf die Bodenfläche werfen, die der Benutzer durch Verändern der Pose des Geräts an seine Bedürfnisse anpassen kann. Ist er mit dem projizierten Bereich zufrieden, so kann er ihn bestätigen. Anschließend kann er die Maschine auf der Bodenfläche absetzen, um die Reinigung beginnen zu lassen. Es ist besonders bevorzugt, dass der Hinweis auf die Grenzen kontinuierlich zumindest bis zum Starten der Bearbeitung des Bereichs projiziert wird. Eine Pose umfasst allgemein eine Position und eine Ausrichtung und kann durch sechs Koordinaten oder Freiheitsgrade im Raum angegeben werden.

Nach einem zweiten Aspekt der vorliegenden Erfindung ist eine Steuervorrichtung für eine Maschine zur Bearbeitung einer Bodenfläche angegeben, wobei die Steuervorrichtung folgendes umfasst: eine Eingabevorrichtung zur Erfassung einer Anforderung zur Lokalreinigung auf einem Bereich der Bodenfläche; einen Projektor zur Projektion eines Hinweises auf Grenzen eines geplanten Bereichs auf die Bodenfläche; eine Einrichtung zur Erfassung einer Bestätigung des Bereichs, wobei die Bestätigung bestimmt wird, falls über eine vorbestimmte Zeit keine vorbestimmte Bedieneingabe erfasst wurde; und eine Schnittstelle zum Starten der Bearbeitung des Bereichs innerhalb der Grenzen, wobei der Bereich bezüglich der Maschine bestimmt ist und die vorbestimmte Bedieneingabe eine Änderung der Position der Maschine umfasst.

Die Steuervorrichtung kann einfach an einer bestehenden Maschine zur Bearbeitung einer Bodenfläche nachgerüstet werden. Es ist jedoch bevorzugt, dass die Steuervorrichtung auch zur Steuerung der Maschine zur Bearbeitung der Bodenfläche eingerichtet ist.

In einer ersten Variante ist der Projektor zur Projektion eines Bildes mit einer vorbestimmten Anzahl Bildpunkte eingerichtet Dazu kann der Projektor beispielsweise als LED-Projektor oder auf der Basis von schwenkbaren Mikrospiegeln realisiert sein. In dieser Variante kann die Projektion auch großflächig sein und insbesondere den gesamten zur Bearbeitung geplanten Bereich abdecken.

In einer anderen Variante umfasst der Projektor eine Lichtquelle zur Bereitstellung eines Lichtstrahls und eine Ablenkeinrichtung zur Ablenkung des Lichtstrahls. Die Lichtquelle kann insbesondere zur Bereitstellung kohärenten Lichts eingerichtet sein und insbesondere einen Laser umfassen. Die Ablenkeinrichtung kann einen oder mehrere bewegliche Spiegel umfassen. So kann mit relativ geringem Aufwand der Hinweis nach Art einer Vektoranzeige breitgestellt werden. Insbesondere können die Grenzen des Bereichs ganz oder teilweise auf der Bodenfläche angezeigt werden.

In beiden Varianten kann der Projektor zusätzlich zur Darstellung weiterer Parameter eingerichtet sein. Ein solcher Parameter kann beispielsweise einen Betriebszustand, eine verbleibende Zeit bis zur Beendigung der Bearbeitung, einen möglichen Fehlerzustand oder einen verbleibenden Energievorrat umfassen. Andere Parameter können ebenfalls mittels des Projektors ausgegeben werden.

Nach einem weiteren Aspekt der Erfindung umfasst eine Maschine zur Bearbeitung einer Bodenfläche eine hierin beschriebene Steuervorrichtung.

Ein hierin beschriebenes Verfahren ist bevorzugt dazu eingerichtet, auf einer hierin beschriebenen Steuervorrichtung ausgeführt zu werden. Dazu kann die Steuervorrichtung eine Verarbeitungseinrichtung umfassen, die insbesondere einen programmierbaren Mikrocomputer oder Mikrocontroller umfassen kann. Das Verfahren kann in Form eines Computerprogrammprodukts mit Programmcodemitteln vorliegen. Merkmale oder Vorteile des Verfahrens können auf die Vorrichtung übertragen werden und umgekehrt. Das Computerprogrammprodukt kann auf einem computerlesbaren Datenträger abgespeichert sein.

Die Erfindung wird nun unter Bezug auf die beiliegenden Figuren genauer beschrieben, in denen:
- Figur 1: ein System mit einer Maschine zur Bodenbearbeitung;
- Figur 2: beispielhafte Projektionen einer Maschine zur Bodenbearbeitung;
- Figur 3: einen Benutzer mit einer Maschine zur Bodenbearbeitung; und
- Figur 4: ein Ablaufdiagramm eines Verfahrens zum Steuern einer Maschine zur Bodenbearbeitung
darstellt.

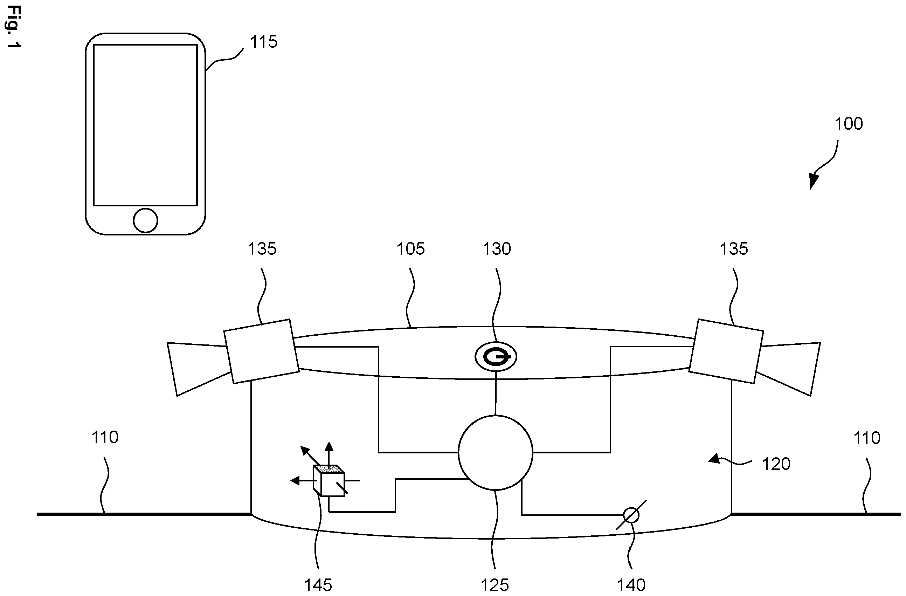

Figur 1 zeigt ein System 100 mit einer Maschine 105, die dazu eingerichtet ist, eine Bodenfläche 110 zu bearbeiten. Die Maschine oder Bodenbearbeitungsmaschine 105 ist bevorzugt zur Reinigung der Bodenfläche 110 eingerichtet und kann beispielsweise einen Staubsaug- oder Wischroboter umfassen. In einer weiteren Ausführungsform umfasst die Maschine 105 einen automatischen Rasenmäher. Es ist bevorzugt, dass die Maschine 105 ein Hausgerät umfasst und dazu eingerichtet ist, in einem Haushalt, insbesondere einem Privathaushalt, eingesetzt zu werden. Optional umfasst das System 100 zusätzlich eine separate Bedieneinrichtung 115, die bevorzugt drahtlos mit der Maschine 105 gekoppelt ist. Die Bedieneinrichtung 115 kann insbesondere ein Mobilgerät wie ein Smartphone, einen Laptopcomputer, einen Tabletcomputer oder ein ähnliches Gerät umfassen.

Die Maschine 105 kann bevorzugt mittels einer Steuervorrichtung 120 gesteuert werden. Die Steuervorrichtung 120 umfasst bevorzugt eine Verarbeitungseinrichtung 125, eine Eingabevorrichtung 130, einen oder mehrere Projektoren 135 und eine Schnittstelle 140. Ferner kann eine Positioniereinrichtung 145 vorgesehen sein, die dazu eingerichtet ist, eine Position und/oder eine Lage der Maschine 105 zu bestimmen. Die Positioniereinrichtung 145 kann beispielsweise ein Gyroskop, einen Beschleunigungssensor, eine Inertialplattform oder eine Kamera umfassen. Die Eingabevorrichtung 130 ist üblicherweise haptisch ausgeführt und kann beispielsweise eine Taste, einen Schalter oder eine berührungsempfindliche Oberfläche (Touchpad, Touchscreen) umfassen.

Die Steuervorrichtung 120 kann dazu eingerichtet sein, mittels eines Projektors 135 verschiedene Informationen auf die Bodenfläche 110 zu projizieren. Beispielsweise können so ein Ladezustand eines Energiespeichers, ein Beladungszustand eines Schmutzbehälters, ein Wartungshinweis, ein Fehlercode und/oder eine geplante Reinigung optisch dargestellt werden. Die Projektion kann eine symbolische, graphische, numerische oder alphanumerische Ausgabe implementieren. Die Projektion kann monochrom oder in mehreren Farben erfolgen, wobei eine Farbe mit Signalwirkung, beispielsweise Rot, für besonders hervorzuhebende Informationen verwendet werden kann. In einigen Ausführungsformen kann die Projektion auch animiert sein, etwa um zu einem erforderlichen Handgriff bei der Wartung der Maschine 105 anzuleiten. Die Animation kann auch einen Lauftext umfassen.

In einer Ausführungsform kann eine Projektion auf der Bodenfläche 110 stillgehalten (stabilisiert) werden, obwohl die Maschine 105 bewegt wird. Dies kann insbesondere eine externe, also nicht mittels eines Antriebssystems bewirkte Bewegung betreffen. Dazu kann die Bewegung mittels des Gyroskops 145 bestimmt und bei der Ausgabe mittels des Projektors 135 berücksichtigt werden.

In einer weiteren Ausführungsform wird die Bewegung bestimmt und ein Hinweis darauf an einen Benutzer ausgegeben. Insbesondere kann darauf hingewiesen werden, ob eine bestimmte Bewegung in Amplitude, Geschwindigkeit und/oder Beschleunigung einen vorbestimmten Schwellenwert übersteigt, sodass die Bewegung als Bedieneingabe aufgefasst wird. Der Hinweis erfolgt bevorzugt akustisch oder optisch, bevorzugt mittels eines Projektors 135.

Es wird vorgeschlagen, dass die Steuervorrichtung 120 dazu eingerichtet ist, eine Anforderung zur Lokalreinigung eines Bereichs der Bodenfläche 110 mittels einer benutzersteuerbaren Eingabe auf der Bedieneinrichtung 115 oder der lokalen Eingabevorrichtung 130 zu erfassen, einen Hinweis auf Grenzen des Bereichs auf die Bodenfläche 110 zu projizieren, eine Bestätigung des Bereichs zu erfassen und die Bearbeitung des Bereichs innerhalb der Grenzen zu starten. Dazu kann die Schnittstelle 140 mit einer weiteren Steuervorrichtung zur Steuerung der Maschine 105 verbunden werden. Optional kann die Steuerung der Maschine 105 vollständig mittels der Steuervorrichtung 120 durchgeführt werden. In diesem Fall kann die Schnittstelle 140 beispielsweise mit einer Antriebs- oder Lenkeinrichtung der Maschine 105 verbunden werden.

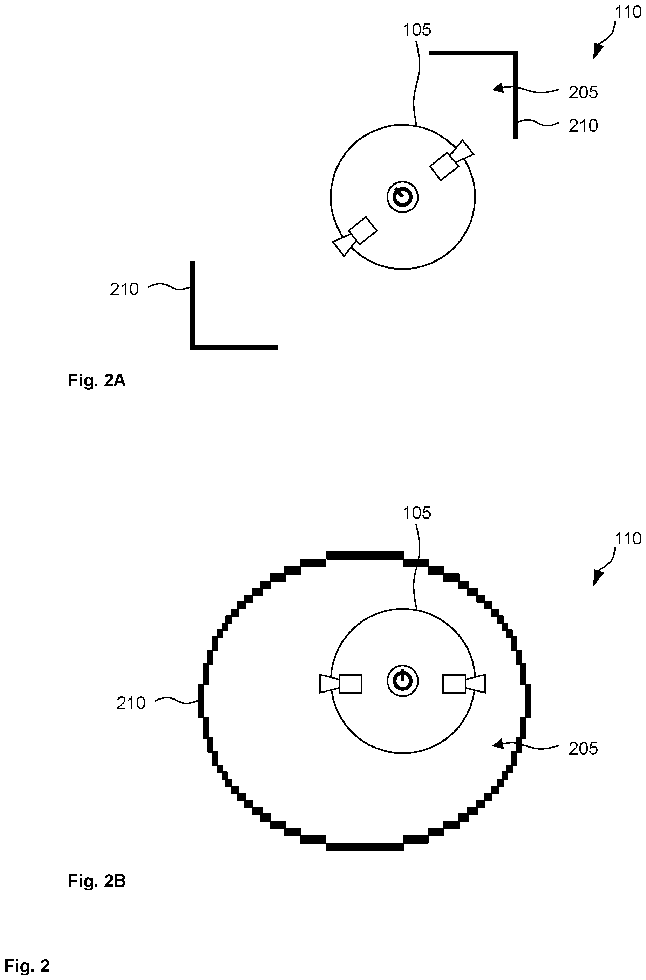

Figur 2 zeigt beispielhafte Projektionen einer Maschine 105 zur Bodenbearbeitung. Dabei ist die Maschine 105 jeweils von oben auf der Bodenfläche 110 schematisch dargestellt.

Der Darstellung von Figur 2A ist ein rechteckiger Bereich 205 zu Grunde gelegt. Eine Projektion 210, die mittels des Projektors 135 auf die Bodenfläche 110 geworfen wird, erstreckt sich entlang einer äußeren Begrenzung des Bereichs 205. Dabei kann die gesamte Grenze durch die Projektion 210 abgedeckt werden. In der dargestellten Ausführungsform umfasst die Projektion 210 zwei Abschnitte, die jeweils eine Ecke des Bereichs 205 kennzeichnen und einander an der Grenze diagonal gegenüberliegen. Eine derartige Projektion 210 kann beispielsweise mittels einer Vektor-Anzeige 135 dargestellt werden, die einen Lichtstrahl einer punktförmigen Lichtquelle auf vorbestimmte Positionen auf der Bodenfläche 110 ablenken kann. Ein zusammenhängendes Bild kann sich dabei durch die Trägheit des menschlichen Auges ergeben. Um eine helle Darstellung zu erhalten, kann eine Ablenkgeschwindigkeit des Lichtstrahls gesenkt oder eine Wiederholrate der Projektion 210 gesteigert werden. Beides kann gleichzeitig erfolgen, indem eine Länge oder Komplexität der Projektion 210 gesenkt wird. Durch die dargestellte Reduktion der Projektion 210 beispielsweise auf Ecken des Bereichs 205 kann dies gelingen.

Figur 2B liegt ein Bereich 205 in der Form einer Ellipse zu Grunde. Dabei kann ein Projektor 135 verwendet werden, der dazu eingerichtet ist, matrixhaft angeordnete Bildelemente (Pixel) auf die Bodenfläche 110 zu projizieren. Obwohl in Figur 2B nur die Projektion einer Grenze des Bereichs 205 angedeutet ist, kann mit einem derartigen Projektor 135 auch ein größerer Bereich des Bereichs 205 beleuchtet werden. In einer Ausführungsform kann der gesamte Bereich 205 um die Maschine 105 herum beleuchtet werden.

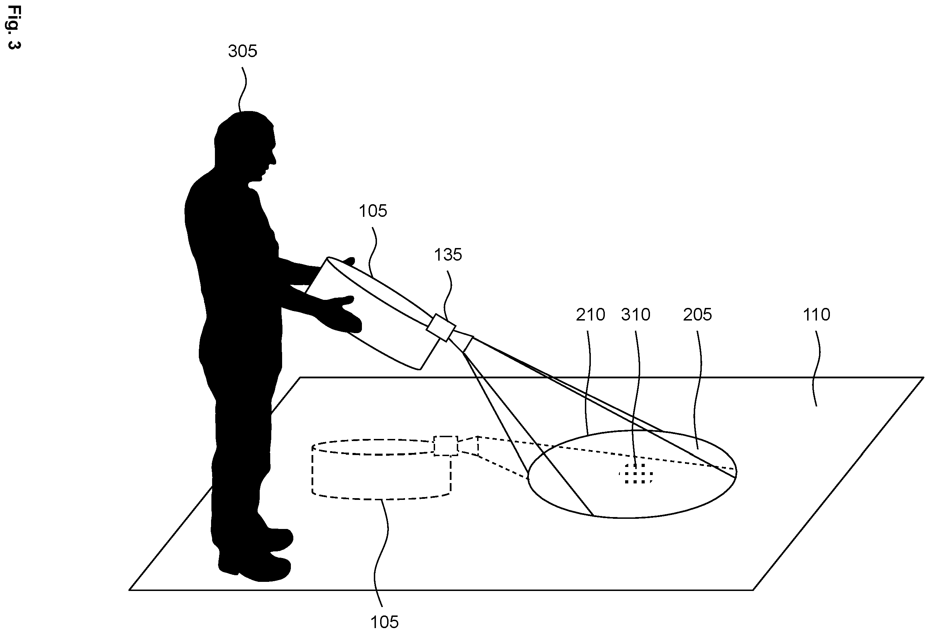

Figur 3 zeigt einen beispielhaften Benutzer 305 der Maschine 105 zur Bearbeitung einer Bodenfläche 110. Der Benutzer 305 hält die Maschine 105 in seinen Händen so, dass der Projektor 135 einen Hinweis auf Grenzen eines Bereichs 205 auf die Bodenfläche 110 projiziert. Dabei kann der Benutzer 305 die Pose der Maschine 105 derart verändern, dass der Bereich 205 in einer vorbestimmten Lage bezüglich einer Verschmutzung 310 liegt, die durch die Maschine 105 bearbeitet werden soll. Ist der Benutzer 305 mit dem Bereich 205 zufrieden, so kann er diesen unmittelbar an der Maschine 105 bestätigen, beispielsweise durch Betätigen der Eingabevorrichtung 130. Anschließend kann er die Maschine 105 auf der Bodenfläche 110 absetzen, wie durch unterbrochene Linien dargestellt ist. Die Maschine 105 kann währenddessen damit fortfahren, die Projektion 210 auf die Bodenfläche 110 zu werfen. Anschließend kann die Maschine 105 dazu angesteuert werden, den vorbestimmten Bereich 205 zu bearbeiten.

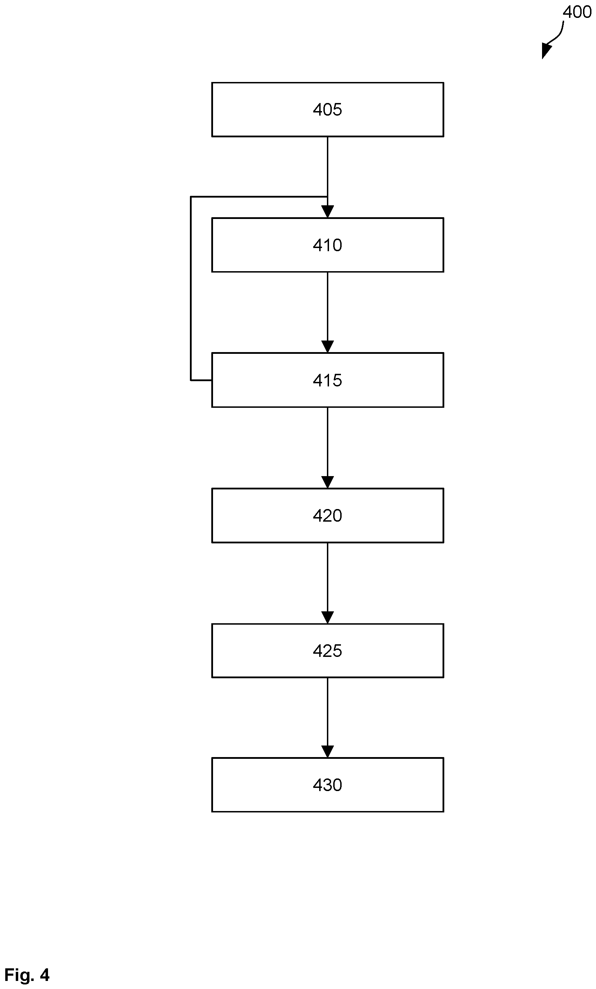

Figur 4 zeigt ein Ablaufdiagramm eines beispielhaften Verfahrens 400 zum Steuern einer Maschine 105 zur Bearbeitung einer Bodenfläche 110. Das Verfahren 400 kann insbesondere in Kombination mit einer Maschine 105 oder einem System 100 nach Figur 1 angewandt werden. Rein beispielhaft wird im Folgenden von einem Reinigungsroboter ausgegangen.

In einem Schritt 405 kann seitens der Maschine 105 eine Anforderung zur Lokalreinigung (Spot-Reinigung) der Bodenfläche 110 erfasst werden. Dabei soll nicht die gesamte Bodenfläche 110, sondern nur ein noch zu bestimmender Abschnitt oder Bereich 205 bearbeitet werden.

In einem Schritt 410 kann ein Hinweis auf Grenzen des Bereichs 205 auf die Bodenfläche 110 projiziert werden. Dabei kann von einem Bereich 205 von einer vorbestimmten Größe und Form ausgegangen werden. Eine Position des Bereichs 205 kann bezüglich der Maschine 105 bestimmt sein.

In einem Schritt 415 kann eine Bedieneingabe eines Benutzers 305 erfasst werden. Die Bedieneingabe umfasst üblicherweise eine Anpassung des Bereichs 205, beispielsweise bezüglich seiner Form, Größe oder Position. Auch andere Aspekte wie ein Seitenverhältnis oder eine ähnliche Proportion können betroffen sein. Wurde eine Bedieneingabe erfasst, so kann das Verfahren 400 zum Schritt 410 zurückkehren und erneut durchlaufen. Dadurch kann der Benutzer 305 eine Auswirkung seiner Änderungen unmittelbar in der Projektion 210 auf der Bodenfläche 110 erfassen.

In einem Schritt 420 kann eine Bestätigung des Bereichs 205 erfasst werden. In einer Variante wird die Bestätigung erfasst, nachdem innerhalb eines vorbestimmten Zeitabschnitts keine Bedieneingaben oder keine auf den Bereich 205 gerichteten Bedieneingaben erfasst wurden. Alternativ kann der Benutzer 305 die Bestätigung auch unmittelbar mittels der Bedieneinrichtung 115 oder der Eingabevorrichtung 130 an der Maschine 105 bereitstellen.

In einem Schritt 425 kann ein Bodenkontakt der Maschine 105 erfasst werden. Dieser Schritt ist üblicherweise nur dann erforderlich, wenn die Maschine 105 während der Definition des Bereichs 205 durch den Benutzer 305 in der Hand gehalten wurde und keinen Kontakt zur Bodenfläche 110 hatte. In einer anderen Ausführungsform kann die Maschine 105 bereits früher auf der Bodenfläche 110 gestanden sein und die Veränderung des Bereichs 205 kann durch Beeinflussung des Projektors 135 und/oder Steuern der Maschine 105 über die Bodenfläche 110 angepasst worden sein.

In einem Schritt 430 kann ein Reinigen des vorbestimmten Bereichs 205 gesteuert werden. Dazu können entsprechende Positions-, Lage- und/oder Form-Parameter des Bereichs 205 an eine entsprechende Steuervorrichtung 120 der Maschine 105 übermittelt werden. Optional wird ein Bewegen der Maschine 105 in den vorbestimmten Bereich 205 und/oder eine Operation einer Einrichtung zur Bearbeitung der Bodenfläche 110 gesteuert.

### Bezugszeichen

- 100: System
- 105: Maschine
- 110: Bodenfläche
- 115: Bedieneinrichtung
- 120: Steuervorrichtung
- 125: Verarbeitungseinrichtung
- 130: Eingabevorrichtung
- 135: Projektor
- 140: Schnittstelle
- 145: Positioniereinrichtung

- 205: Bereich
- 210: Projektion

- 305: Benutzer
- 310: Verschmutzung

- 400: Verfahren
- 405: Anforderung zur Lokalreinigung erfassen
- 410: Hinweis auf Bereichsgrenzen projizieren
- 415: Bedieneingabe erfassen
- 420: Bestätigung erfassen
- 425: Bodenkontakt erfassen
- 430: Bearbeiten starten

## Patentansprüche

1. Verfahren (400) zum Steuern einer Maschine (105) zur Bearbeitung einer Bodenfläche (110) mittels einer Steuervorrichtung (120), folgende Schritte umfassend:
- Erfassen (405) einer Anforderung zur Lokalreinigung auf einem Bereich der Bodenfläche (110);
- Projizieren (410) eines Hinweises auf Grenzen eines geplanten Bereichs (205) auf die Bodenfläche (110) mittels eines Projektors (135) der Steuervorrichtung (120);
- Erfassen (420) einer Bestätigung des Bereichs (205), wobei die Bestätigung bestimmt (420) wird, falls über eine vorbestimmte Zeit keine vorbestimmte Bedieneingabe erfasst wurde; und
- Starten (430) der Bearbeitung des Bereichs (205) innerhalb der Grenzen mittels der Maschine (105);
- **dadurch gekennzeichnet, dass** der Bereich (205) bezüglich der Maschine (105) bestimmt ist und die vorbestimmte Bedieneingabe eine Änderung der Position der Maschine (105) umfasst.

2. Verfahren (400) nach Anspruch 1, wobei der Bereich (205) eine aktuelle Position der Maschine (105) auf der Bodenfläche (110) umfasst.

3. Verfahren (400) nach einem der vorangehenden Ansprüche, wobei der Bereich (205) eine vorbestimmte Form aufweist und die vorbestimmte Bedieneingabe eine Änderung der Größe der Form umfasst.

4. Verfahren (400) nach einem der vorangehenden Ansprüche, wobei der Bereich (205) viereckig ist und die Grenzen jeweils im Bereich (205) zweier einander diagonal gegenüberliegender Ecken auf die Bodenfläche (110) projiziert werden.

5. Verfahren (400) nach einem der vorangehenden Ansprüche, wobei der Bereich (205) bezüglich der Bodenfläche (110) bestimmt ist; und eine Veränderung einer Pose der Maschine (105) zwischen dem Erfassen der Bestätigung und dem Starten der Bearbeitung bestimmt wird.

6. Verfahren (400) nach Anspruch 5, wobei der Hinweis von der geänderten Pose aus projiziert wird.

7. Verfahren (400) nach Anspruch 5 oder 6, wobei die Änderung der Pose ein Ablegen (425) der Maschine (105) auf der Bodenfläche (110) umfasst.

8. Steuervorrichtung (120) für eine Maschine (105) zur Bearbeitung einer Bodenfläche (110), wobei die Steuervorrichtung (120) folgendes umfasst:
- eine Eingabevorrichtung (115, 130) zur Erfassung einer Anforderung zur Lokalreinigung auf einem Bereich der Bodenfläche (110);
- einen Projektor (135) zur Projektion eines Hinweises auf Grenzen eines geplanten Bereichs (205) auf die Bodenfläche (110);
- eine Einrichtung (115, 130) zur Erfassung einer Bestätigung des Bereichs (205), wobei die Bestätigung bestimmt wird, falls über eine vorbestimmte Zeit keine vorbestimmte Bedieneingabe erfasst wurde; und
- eine Schnittstelle (140) zum Starten der Bearbeitung des Bereichs (205) innerhalb der Grenzen, **dadurch gekennzeichnet, dass**
der Bereich (205) bezüglich der Maschine (105) bestimmt ist und die vorbestimmte Bedieneingabe eine Änderung der Position der Maschine (105) umfasst.

9. Steuervorrichtung (120) nach Anspruch 8, wobei der Projektor (135) zur Projektion eines Bildes mit einer vorbestimmten Anzahl Bildpunkte eingerichtet ist.

10. Steuervorrichtung (120) nach Anspruch 9, wobei der Projektor (135) eine Lichtquelle zur Bereitstellung eines Lichtstrahls und eine Ablenkeinrichtung zur Ablenkung des Lichtstrahls umfasst.

11. Maschine (105) zur Bearbeitung einer Bodenfläche (110), umfassend eine Steuervorrichtung (120) nach einem der Ansprüche 8 bis 10.

## Claims

1. Method (400) for controlling a machine (105) for processing a floor surface (110) by means of a control apparatus (120), comprising the following steps:
- Detecting (405) a request for local cleaning on an area of the floor surface (110);
- Projecting (410) an indication of boundaries of a planned area (205) onto the floor surface (110) by means of a projector (135) of the control apparatus (120);
- Detecting (420) a confirmation of the area (205), wherein the confirmation is determined (420) if no predetermined operating input has been detected during a predetermined time; and
- Starting (430) the processing of the area (205) within the boundaries by means of the machine (105);
- **characterised in that** the area (205) is determined with reference to the machine (105) and the predetermined operating input comprises changing the position of the machine (105).

2. Method (400) according to claim 1, wherein the area (205) includes a current position of the machine (105) on the floor surface (110).

3. Method (400) according to one of the preceding claims, wherein the area (205) has a predetermined shape and the predetermined operating input comprises changing the size of the shape.

4. Method (400) according to one of the preceding claims, wherein the area (205) is quadrilateral and each of the boundaries in the area (205) of two diagonally opposite corners are projected onto the floor surface (110).

5. Method (400) according to one of the preceding claims, wherein the area (205) is determined with reference to the floor surface (110); and a change in the posture of the machine (105) is determined between detecting the confirmation and starting the processing.

6. Method (400) according to claim 5, wherein the indication is projected from the changed posture.

7. Method (400) according to claim 5 or 6, wherein the change in the posture comprises placing (425) the machine (105) on the floor surface (110).

8. Control apparatus (120) for a machine (105) for processing a floor surface (110),
wherein the control apparatus (120) comprises the following:
- An input apparatus (115, 130) for detecting a request for local cleaning on an area of the floor surface (110);
- A projector (135) for projecting an indication of boundaries of a planned area (205) onto the floor surface (110);
- A facility (115, 130) for detecting a confirmation of the area (205), wherein the confirmation is determined if no predetermined operating input has been detected during a predetermined time; and
- An interface (140) for starting the processing of the area (205) within the boundaries, **characterised in that**
the area (205) is determined with reference to the machine (105) and the predetermined operating input comprises changing the position of the machine (105).

9. Control apparatus (120) according to claim 8, wherein the projector (135) is configured to project an image with a predetermined number of pixels.

10. Control apparatus (120) according to claim 9, wherein the projector (135) comprises a light source for providing a light beam and a deflection facility for deflecting the light beam.

11. Machine (105) for processing a floor surface (110), comprising a control apparatus (120) according to one of claims 8 to 10.

## Revendications

1. Procédé (400) de commande d'une machine (105) de traitement d'une surface du sol (110) au moyen d'un dispositif de commande (120), comprenant les étapes suivantes :
- détection (405) d'une demande de nettoyage local sur une zone de la surface de sol (110),
- projection (410) d'une indication sur des limites d'une zone prévue (205) sur la surface de sol (110) au moyen d'un projecteur (135) du dispositif de commande (120),
- détection (420) d'une validation de la zone (205), dans lequel la validation est déterminée (420) dans le cas où aucune entrée de commande prédéterminée n'a été détectée pendant une période prédéfinie, et
- démarrage (430) du traitement de la zone (205) à l'intérieur des limites au moyen de la machine (105),
**caractérisé en ce que** la zone (205) est déterminée par rapport à la machine (105) et l'entrée de commande prédéfinie comprend une modification de la position de la machine (105).

2. Procédé (400) selon la revendication 1, dans lequel la zone (205) comprend une position actuelle de la machine (105) sur la surface de sol (110).

3. Procédé (400) selon l'une des revendications précédentes, dans lequel la zone (205) comprend une forme prédéterminée et l'entrée de commande prédéfinie comprend une modification de la grandeur de la forme.

4. Procédé (400) selon l'une des revendications précédentes, dans lequel la zone (205) est quadrangulaire et les limites de deux coins opposés en diagonale l'un à l'autre sont projetées respectivement sur la surface du sol (110) dans la zone (205).

5. Procédé (400) selon l'une des revendications précédentes, dans lequel la zone (205) est déterminée par rapport à la surface du sol (110) et une modification d'une posture de la machine (105) est déterminée entre la détection de la validation et le démarrage du traitement.

6. Procédé (400) selon la revendication 5, dans lequel l'indication est projetée à partir de la posture modifiée.

7. Procédé (400) selon la revendication 5 ou 6, dans lequel la modification de la posture comprend une déposition (425) de la machine (105) sur la surface du sol (110).

8. Dispositif de commande (120) pour une machine (105) de traitement d'une surface de sol (110), dans lequel le dispositif de commande (120) comprend les suivants :
- un dispositif d'entrée (115, 130) pour détecter une demande de nettoyage local sur une zone de la surface de sol (110),
- un projecteur (135) pour projeter une indication de limites d'une zone prévue (205) sur la surface du sol (110),
- un dispositif (115, 130) pour détecter une validation de la zone (205), dans lequel la validation est déterminée dans le cas où aucune entrée de commande prédéterminée n'a été détectée pendant une période prédéfinie, et
- une interface (140) pour démarrer le traitement de la zone (205) à l'intérieur des limites,
**caractérisé en ce que**
la zone (205) est déterminée par rapport à la machine (105) et l'entrée de commande prédéterminée comprend une modification de la position de la machine (105).

9. Dispositif de commande (120) selon la revendication 8, dans lequel le projecteur (135) est configuré pour projeter une image comprenant un nombre prédéterminé de pixels.

10. Dispositif de commande (120) selon la revendication 9, dans lequel le projecteur (135) comprend une source de lumière permettant de fournir un faisceau lumineux et un moyen de déviation pour dévier le faisceau lumineux.

11. Machine (105) de traitement d'une surface de sol (110), comprenant un dispositif de commande (120) selon l'une des revendications 8 à 10.
